## Europäisches Patentamt
## European Patent Office
## Office européen des brevets

(19)

(11) Numéro de publication : **0 168 298**
**B1**

(12) # FASCICULE DE BREVET EUROPÉEN

(45) Date de publication du fascicule du brevet :
20.01.88

(51) Int. Cl.⁴ : **F 23 K   3/02, B 65 G  53/12,**
**G 01 G  21/30, G 01 G  11/08**

(21) Numéro de dépôt : 85401186.3

(22) Date de dépôt : 14.06.85

(54) Dispositif d'alimentation à dosage pondéral d'un produit pulvérulent fourni à une conduite pneumatique.

(30) Priorité : 18.06.84 FR 8409491

(43) Date de publication de la demande :
15.01.86 Bulletin 86/03

(45) Mention de la délivrance du brevet :
20.01.88 Bulletin 88/03

(84) Etats contractants désignés :
AT BE CH DE GB IT LI LU NL SE

(56) Documents cités :
EP-A- 0 060 137
BE-A-   530 866
DE-A- 3 300 911
DE-C-   482 402
US-A- 2 990 898
US-A- 4 373 451

(73) Titulaire : **CHARBONNAGES DE FRANCE, Etablisse-**
**ment public dit:**
**Tour Albert 1er 65 avenue de Colmar**
**F-92507 Rueil Malmaison Cédex (FR)**

(72) Inventeur : **Flament, Gérard**
**4, rue Taffenel**
**F-60550 Verneuil en Halatte (FR)**
Inventeur : **Le Calvez, Jean-Pierre**
**3, rue de l'Harmonie**
**F-75015 Paris (FR)**

(74) Mandataire : **Chevallier, Robert Marie Georges et al**
**Cabinet BOETTCHER 23, rue La Boétie**
**F-75008 Paris (FR)**

## Description

L'invention a pour objet un dispositif d'alimentation d'une installation, d'une machine, d'un appareil, plus particulièrement d'un brûleur de chaudière, à un débit dosé en poids, d'un produit pulvérulent comme du charbon pulvérisé quand il s'agit d'un brûleur, par l'intermédiaire d'une conduite pneumatique à gaz sous pression, qui est généralement de l'air notamment pour l'alimentation d'un brûleur.

On connaît déjà, d'une manière générale, les conduites de transport pneumatique de produits poudreux ou granuleux.

Dans le document FR-A-2 526 541, il est décrit un appareil de dosage dont le rôle est de réaliser un dosage pondéral d'un produit pulvérulent qui est introduit dans une conduite de transport pneumatique. Cet appareil comprend un rotor à chambres individuelles, disposées circonférentiellement, qui passent successivement à une station de chargement sous une trémie où elles sont remplies en produit pulvérulent et à une station de déchargement où de l'air sous pression expulse ce produit dans la conduite de transport pneumatique. Du fait même de ce mode de fonctionnement, l'alimentation de cette conduite n'est pas parfaitement continu, mais présente un caractère pulsatoire. Même si ce caractère est peu accentué, il ne convient pas quand il s'agit d'alimenter un brûleur parce qu'il en résulte des pulsations qui perturbent la flamme. Une combustion de bonne qualité ne s'obtient que lorsque le débit du charbon pulvérisé conduit jusqu'au brûleur est régulier et constant.

On connaît aussi, par ailleurs, un appareil de dosage continu de produits pulvérulents en vrac. Ces produits sont envoyés à une trémie sous laquelle se trouve un extracteur-évacuateur à bande ; cet ensemble repose sur une balance de sensibilité élevée ; un régulateur à micro-processeur calcule en permanence la perte de poids par unité de temps et régule la vitesse de la bande de l'extracteur en fonction de l'écart par rapport à une valeur de consigne du débit. Pour des débits qui peuvent se situer entre 0,1 et 10 000 kg/h la précision est de l'ordre de ± 1 %. Cet appareil est disponible dans le commerce sous la référence LWF-B ; il est fabriqué par la Société suisse K-TRON SODER. Il existe d'autres appareils similaires provenant d'autres fabricants et qui sont employés principalement dans l'industrie alimentaire.

En raison de son débit régulier et précis, un tel appareil convient bien à l'alimentation d'un brûleur de charbon pulvérisé. Mais il n'est pas apte à fonctionner sous pression pour alimenter une conduite pneumatique qui est elle-même parcourue par un courant d'air sous pression entraînant le produit pulvérulent. Le raccordement direct de l'orifice de sortie de cet appareil à une conduite pneumatique n'est pas possible.

L'invention a pour but principal de parvenir à un dispositif qui se combine à l'appareil défini ci-dessus pour permettre de l'utiliser comme moyen d'alimentation d'une conduite pneumatique en produit pulvérisé et dosé à un débit constant et précis, sans phénomène vibratoire ou pulsatoire.

L'invention a aussi pour but secondaire d'assurer avec ce dispositif une protection contre les risques d'explosion en cas de possibilité de création d'un mélange explosif entre le produit dosé et le gaz de la conduite pneumatique.

Pour alimenter en produit pulvérulent un organe utilisateur qui doit être alimenté à un débit dosé et constant à l'aide d'une conduite pneumatique sous pression à partir d'un appareil de dosage pondéral comprenant une trémie et un extracteur-évacuateur, selon l'invention une enceinte étanche contient en totalité cet appareil de dosage pondéral, des moyens d'établissement et de réglage d'une pression de gaz à l'intérieur de cette enceinte sont raccordés à celle-ci pour y maintenir une pression égale à la pression établie dans la conduite pneumatique ; une première canalisation traverse la paroi de l'enceinte et raccorde la sortie de l'extracteur-évacuateur à la conduite pneumatique ; une deuxième canalisation traverse la paroi de l'enceinte et raccorde la trémie de l'appareil de dosage pondéral à une trémie extérieure de chargement à fonctionnement intermittent sous pression de type connu en soi, disponible dans le commerce.

De préférence, la trémie de l'appareil de dosage pondéral est obturée à sa partie supérieure, la première canalisation venant de la conduite pneumatique à travers la paroi de l'enceinte a une branche qui aboutit à cette trémie dans laquelle elle s'ouvre ; avantageusement cette canalisation est munie d'un capteur de pression différentielle entre la conduite pneumatique et l'intérieur de l'enceinte ; ce capteur commande les moyens d'établissement et de réglage de la pression de gaz à l'intérieur de l'enceinte. Il est préférable de prévoir une troisième canalisation qui part de la trémie et qui traverse la paroi de l'enceinte pour laisser échapper le gaz de cette trémie lors des chargements de celle-ci.

Selon un mode de réalisation préféré de l'invention, la trémie extérieure de chargement est installée à un niveau plus élevé que l'enceinte et la deuxième canalisation est suffisamment proche de la verticale pour que le chargement intermittent de la trémie de l'appareil de dosage se fasse par gravité, au moins en partie.

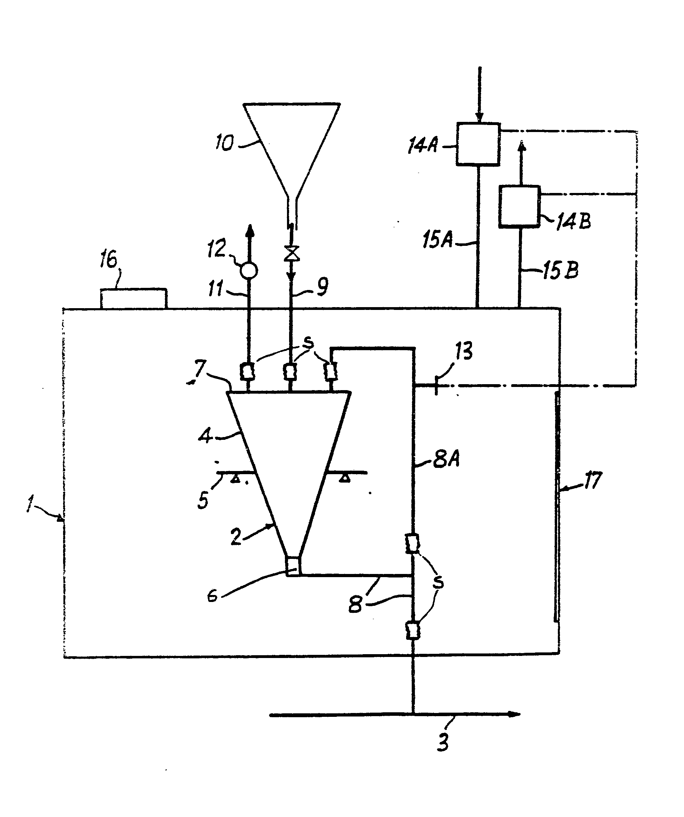

On donnera maintenant, sans intention limitative et sans exclure aucune variante une description d'un exemple préféré de réalisation. On se reportera à la figure unique annexée qui est une représentation schématique d'un dispositif conforme à l'invention.

Une enceinte 1, étanche, conçue pour résister à une pression de service de n bars contient en totalité un appareil de dosage pondéral 2 disponible dans le commerce ; dans cet exemple il s'agit d'un appareil référence LWF-B de la Société Suisse K-TRON SODER. Cet appareil 2 est destiné à alimenter en produit pulvérulent, par exemple en charbon pulvérisé, une conduite de transport pneumatique 3, extérieure à l'enceinte 1, qui aboutit à un brûleur à charbon pulvérulent. Ce dernier doit être alimenté d'une façon constante sans fluctuations, sans vibrations ni pulsations qui sont nuisibles à la qualité de la combustion.

L'appareil de dosage 2 comprend une trémie 4 supportée par des moyens de pesage 5 et terminée à sa partie inférieure par un extracteur-évacuateur 6 qui en constitue l'organe de sortie.

Selon l'invention, la trémie 4 est obturée par un fond supérieur 7 ; une première canalisation 8 part de l'extracteur-évacuateur 6, traverse la paroi de l'enceinte 1 et aboutit à la conduite de transport pneumatique 3 dans laquelle règne une pression de n bars ; une deuxième canalisation 9 s'ouvrant dans la trémie 4 part du fond supérieur 7 de celle-ci, traverse la paroi de l'enceinte 1 et aboutit à une trémie extérieure de chargement 10, représentée en trait fin, située de préférence à un niveau supérieur à celui de l'enceinte 1 ; une troisième canalisation 11 s'ouvrant dans la trémie 4 part du fond supérieur 7, traverse la paroi de l'enceinte 1 et s'ouvre à l'air libre, de préférence à travers un clapet 12.

La première canalisation 8 est prolongée par une branche 8A qui aboutit au fond supérieur 7 pour s'ouvrir à l'intérieur de la trémie 4. Sur cette branche 8A de la première canalisation 8 est monté un capteur de pression différentielle 13 qui commande des moyens 14A, 14B d'établissement et de contrôle d'une atmosphère à la pression de n bars à l'intérieur de l'enceinte 1. Plus précisément, les moyens 14A sont reliés à l'enceinte 1 par une tubulure 15A pour y envoyer un gaz sous pression et les moyens 14B sont reliés à l'enceinte 1 par une tubulure 15B pour en laisser sortir du gaz.

Bien entendu, l'enceinte 1 est équipée d'une soupape de sûreté 16 contre les surpressions et elle est pourvue d'une porte 17 à fermeture étanche. Des raccords souples S sont prévus sur les canalisations 8, 8A, 9, 11 aux emplacements utiles.

Avec le dispositif de l'invention, l'appareil de dosage 2 est exposé en totalité par l'extérieur et par l'intérieur à la pression de n bars, il existe donc un équilibre des pressions grâce auquel l'appareil est, en définitive, soustrait à l'effet de la pression et fonctionne convenablement. Comme cette pression est la même que la pression de n bars qui règne dans la conduite de transport pneumatique 3, l'extraction et l'évacuation jusqu'à cette dernière à partir de la trémie 4 n'en sont pas perturbées ; l'alimentation reste régulière en raison de l'équilibre qui se fait aussi entre la conduite 3 et la trémie 4.

On remarquera qu'il n'est pas strictement nécessaire d'obturer la trémie 4 par le fond supérieur 7, ni de réunir la première canalisation 8 à la trémie 4 par la branche 8A de la canalisation 8. A partir du moment où l'appareil de dosage 2 se trouve complètement inclus dans l'enceinte 1 où est maintenue par les moyens d'établissement et de réglage 14A, 14B une pression de n bars égale à celle de la conduite de transport pneumatique 3, l'équilibre des pressions interne et externe à cet appareil de dosage 2 s'établit aussi. Dans ce cas, le détecteur de pression différentielle 13 est monté de façon à être influencé à la fois par la pression interne à l'enceinte 1 et par la pression dans la conduite de transport pneumatique 3. Toutefois, la pression est susceptible de varier à l'intérieur de cette dernière ; il est important que l'équilibre des pressions soit maintenu en permanence entre l'entrée de l'appareil de dosage 2, c'est-à-dire la trémie 4, et la sortie de ce même appareil, c'est-à-dire la première canalisation 8. La disposition décrite plus haut est préférée parce qu'elle garantit de manière sûre et permanente cet équilibre des pressions. La troisième canalisation 11 laisse échapper du gaz hors de la trémie 4 dans le cas où une surpression rapide tendrait à s'y établir, particulièrement au moment des chargements.

La trémie extérieure de chargement 10 est d'un type classique connu ; elle peut être remplie, mise sous pression de gaz, reliée à la trémie 4 par la deuxième canalisation 9 pour que le produit descende dans celle-ci par gravité ; ensuite, elle est isolée de la trémie 4, remplie à nouveau, et ainsi de suite de sorte que cette trémie 4 est alimentée par intermittence, sans perturbation du débit dosé fourni à la conduite de transport pneumatique 3.

Le dispositif de l'invention assure en plus une protection du personnel contre les risques d'explosion lorsque le produit dosé et le gaz de la conduite de transport pneumatique peuvent créer, dans certaines conditions, un mélange explosif.

**Revendications**

1. Dispositif d'alimentation en produit pulvérulent, à dosage pondéral et à débit contrôlé, comprenant, d'une part un appareil (2) de dosage pondéral ayant une trémie (4) et un extracteur-évacuateur (6) pour l'alimentation d'une conduite de transport pneumatique (3), fonctionnant sous une pression de n bars, caractérisé en ce qu'une enceinte étanche (1) contient en totalité l'appareil (2) de dosage pondéral, une première canalisation (8) traverse la paroi de cette enceinte (1) pour le raccordement de l'extracteur-évacuateur (6) à la conduite de transport pneumatique (3), une deuxième canalisation (9) traverse la paroi de l'enceinte (1) pour le raccordement de la trémie (4) de l'appareil (2) de dosage pondéral à une trémie extérieure (10) de chargement, des moyens (13, 14A,14B) établissant et réglant à l'intérieur de l'enceinte (1) une pression de gaz à une valeur de n bars égale à celle de la conduite de transport pneumatique (3).

2. Dispositif selon la revendication 1, caractérisé en ce que la trémie (4) de l'appareil de dosage pondéral (2) est obturée à sa partie supérieure et la première canalisation (8) a une branche (8A) qui s'ouvre à l'intérieur de ladite trémie (4).

3. Dispositif selon la revendication 2, caractérisé en ce que les moyens (13, 14A, 14B) d'établissement et de réglage d'une pression de gaz comprennent un capteur (13) de pression différentielle qui est monté sur la branche (8A) de la première canalisation (8) pour détecter la différence de pression entre la conduite de transport pneumatique (3) et l'intérieur de l'enceinte (1).

4. Dispositif selon la revendication 2, caractérisé en ce qu'une troisième canalisation (11) part de la trémie (4) de l'appareil de dosage pondéral, traverse la paroi de l'enceinte (1) et s'ouvre en dehors de celle-ci pour laisser échapper en cas de besoin le gaz de cette trémie (4) pendant son chargement.

5. Dispositif selon la revendication 1, caractérisé en ce que la trémie extérieure (10) de chargement est installée à un niveau supérieur à celui de la trémie (4) de l'appareil de dosage pondéral (2) et le chargement de celle-ci se fait au moins en partie à l'aide de la gravité.

6. Dispositif selon la revendication 1, caractérisé en ce que les moyens (13, 14A,14B) établissant et réglant une pression de gaz à l'intérieur de l'enceinte (1) comprennent un capteur de pression différentielle (13) sensible à la différence de pression entre la conduite de transport pneumatique (3) et l'enceinte (1), ainsi que des moyens (14A) d'entrée de gaz à l'intérieur de cette enceinte (1) et des moyens (14B), de sortie de gaz hors de cette enceinte (1), ces deux derniers moyens (14A, 14B) étant commandés pour leur fonctionnement par le capteur de pression différentielle (13).

**Claims**

1. Apparatus for supplying powdery material with gravimetric metering and with a controlled flow rate comprising on the one hand a gravimetric metering device (2) having a hopper (4) and an extractor-discharger (6) for supplying a pneumatic conveyor conduit (3), operating under a pressure of n bars, characterised in that a sealed chamber (1) contains the whole of the gravimetric metering device (2), a first duct (8) passes through the wall of said chamber (1) for connection of the extractor-discharger (6) to the pneumatic conveyor conduit (3), a second duct (9) passes through the wall of the chamber (1) for connection of the hopper (4) of the gravimetric metering device (2) to an external loading hopper (10), means (13, 14A, 14B) establishing and regulating a gas pressure within the chamber (1) at a value of n bars, which is equal to that of the pneumatic oonveyor conduit (3).

2. Apparatus according to claim 1 characterised in that the hopper (4) of the gravimetric metering device (2) is closed in its upper part and the first duct (8) has a branch (8A) which opens within said hopper (4).

3. Apparatus according to claim 2 characterised in that the means (13, 14A, 14B) for establishing and regulating a gas pressure comprise a differential pressure sensor (13) which is mounted on the branch (8A) of the first duct (8) for detecting the pressure difference between the pneumatic conveyor conduit (3) and the interior of the chamber (1).

4. Apparatus according to claim 2 characterised in that a third duct (11) starts from the hopper (4) of the gravimetric metering device, passes through the wall of the chamber (1) and opens outside the chamber so as to allow the gas to escape from said hopper (4) if necessary during loading thereof.

5. Apparatus according to claim 1 characterised in that the external loading hopper (10) is installed at a level higher than that of the hopper (4) of the gravimetric metering device (2) and loading of the latter is effected at least in part by means of gravity.

6. Apparatus according to claim 1 characterised in that the means (13, 14A, 14B) for establishing and regulating a gas pressure within the chamber (1) comprise a differential pressure sensor (13) responsive to the pressure difference between the pneumatic conveyor conduit (3) and the chamber (1), and means (14) for the intake of gas into said chamber (1) and means (14B) for the discharge of gas from said chamber (1), said last two means (14A, 14B) being controlled for operation thereof by the differential pressure sensor (13).

**Patentansprüche**

1. Zuführvorrichtung mit gewichtsgeregelter Dosierung für staubförmiges Gut, die einerseits eine Gewichtsdosiervorrichtung (2) mit einem Trichterbunker (4) und einer Extraktor-Evakuiereinrichtung (6) zum Speisen einer pneumatischen Förderleitung (3) aufweist und unter einem Druck von n bar arbeitet, dadurch gekennzeichnet, daß eine dichte Kammer (1) die Gewichtsdosiereinrichtung (2) insgesamt enthält, daß eine erste Leitung (8) die Wandung dieser Kammer (1) zur Verbindung der Extraktor-Evakuiereinrichtung (6) mit der pneumatischen Transportleitung (3) durchsetzt, daß eine zweite Leitung (9) die Wandung der Kammer (1) zur Verbindung des Trichterbunkers (4) der Gewichtsdosiervorrichtung (2) mit einem äußeren Aufgabetrichter (10) durchsetzt ; Einrichtungen (13, 14A, 14B) im Inneren der Kammer (1) einen Gasdruck aufbauen und regeln auf einen Wert von n bar, der gleich dem der pneumatischen Transportleitung (3) ist.

2. Vorrichtung nach Anspruch 1, dadurch gekennzeichnet, daß der Trichterbunker (4) der Gewichtsdosiervorrichtung (2) an seinem oberen Teil verschlossen ist und daß die erste Leitung (8) eine Verzweigung (8A) besitzt, die sich gegen das Innere dieses Trichterbunkers (4) öffnet.

3. Vorrichtung nach Anspruch 2, dadurch gekennzeichnet, daß die Einrichtungen (13, 14A, 14B) für Herstellung und Regeln eines Gasdrucks ein Differenzdruckmeßwertgeber (13) umfassen, der an der Zweigleitung (8A) der ersten Leitung (8) angebracht ist, um die Druckdifferenz zwischen der pneumatischen Transportleitung (3) und dem Inneren der Kammer (1) bestimmen.

4. Vorrichtung nach Anspruch 2, dadurch gekennzeichnet, daß eine dritte Leitung (11) vom Trichterbunker (4) der Gewichtsdosiervorrichtung abgeht, die Wandung der Kammer (1) durchsetzt und sich außerhalb dieser öffnet, um gegebenenfalls das Gas aus diesem Bunkertrichter (4) während seiner Aufgabe entweichen zu lassen.

5. Vorrichtung nach Anspruch 1, dadurch gekennzeichnet, daß der äußere Aufgabetrichter (10) auf einem Niveau oberhalb desjenigen des Trichterbunkers (4) der Gewichtsdosiereinrichtung (2) angeordnet ist und daß dessen Beschickung wenigstens zum Teil mit Hilfe von Schwerkraft erfolgt.

6. Vorrichtung nach Anspruch 1, dadurch gekennzeichnet, daß die Einrichtungen (13, 14A, 14B), die einen Gasdruck im Inneren der Kammer (1) herstellen und regeln, einen Differentialdruckmeßwertgeber (13) umfassen, der empfindlich für die Druckdifferenz zwischen der pneumatischen Transportleitung (3) und der Kammer (1) ist sowie Einrichtungen (14A) für den Einlaß von Gas in das Innere dieser Kammer (1) sowie Einrichtungen (14B) für den Auslaß des Gases aus dieser Kammer (1), wobei diese beiden letztgenannten Einrichtungen (14A, 14B) in ihrer Funktionsweise durch den Differenzdruckmeßwertgeber (13) gesteuert sind.